(19) Europäisches Patentamt
European Patent Office
Office européen des brevets

(11) Veröffentlichungsnummer : **0 427 060 B1**

# (12) EUROPÄISCHE PATENTSCHRIFT

(45) Veröffentlichungstag der Patentschrift :
**29.12.93 Patentblatt 93/52**

(51) Int. Cl.$^5$ : **C08F 4/651,** C08F 4/654, C08F 10/00

(21) Anmeldenummer : **90120547.6**

(22) Anmeldetag : **26.10.90**

## (54) Katalysatorsysteme vom Typ der Ziegler-Natta-Katalysatoren.

Die Akte enthält technische Angaben, die nach dem Eingang der Anmeldung eingereicht wurden und die nicht in dieser Patentschrift enthalten sind.

(30) Priorität : **06.11.89 DE 3936856**

(43) Veröffentlichungstag der Anmeldung :
**15.05.91 Patentblatt 91/20**

(45) Bekanntmachung des Hinweises auf die Patenterteilung :
**29.12.93 Patentblatt 93/52**

(84) Benannte Vertragsstaaten :
**AT BE DE ES FR GB IT NL**

(56) Entgegenhaltungen :
**EP-A- 0 171 200**
**EP-A- 0 341 723**
**FR-A- 2 516 520**

(73) Patentinhaber : **BASF Aktiengesellschaft**
**Carl-Bosch-Strasse 38**
**D-67063 Ludwigshafen (DE)**

(72) Erfinder : **Schwager, Harald, Dr.**
**Ziegelofenweg 7**
**W-6720 Speyer (DE)**
Erfinder : **Koelle, Peter, Dr.**
**An der Froschlache 19**
**W-6700 Ludwigshafen (DE)**
Erfinder : **Kerth, Jürgen, Dr.**
**Wattenheimer Strasse 15**
**W-6719 Carlsberg (DE)**
Erfinder : **Zolk, Ralf, Dr.**
**Weinbietstrasse 7**
**W-6714 Weisenheim (DE)**

EP 0 427 060 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Katalysatorsysteme vom Typ der Ziegler-Natta-Katalysatoren, enthaltend als aktive Bestandteile

a) eine titanhaltige Feststoffkomponente, die Titan, Magnesium, Halogen und einen Carbonsäureester enthält,

sowie als Cokatalysator

b) eine Aluminiumverbindung und

c) gegebenenfalls weitere Elektronendonorverbindungen, die durch die Verwendung von Estern spezieller Carbonsäuren gekennzeichnet sind.

Außerdem betrifft die Erfindung die Herstellung solcher Katalysatorsysteme, die Herstellung von Polymerisaten des Propylens mit Hilfe dieser Katalysatorsysteme, die hiernach erhältlichen Polymerisate sowie Folien und Formkörper aus diesen Polymerisaten.

Katalysatorsysteme vom Typ der Ziegler-Natta-Katalysatoren sind u.a. aus der EP-B 14523, der EP-A-23425, der EP-A 45975 und der EP-A 195 497 bekannt. Diese Systeme werden insbesondere zur Polymerisation von $\alpha$-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titanverbindung und andererseits als Cokatalysator verwendet werden.

Um eine wirtschaftliche Polyolefinproduktion zu gewährleisten, müssen solche Katalysatorsysteme u.a. eine hohe Produktivität aufweisen. Darunter versteht man das Verhältnis der gebildeten Menge Polymerisat zur Menge des eingesetzten Katalysators. Weiterhin ist es erforderlich, daß die dabei erhältlichen Polymerisate möglichst stereospezifisch ausgerichtet sind, d.h. der Anteil nichtisotaktischer Molekülstrukturen in Homopolymerisaten sollte 2 % bis 2,5 % nicht übersteigen.

Diese beiden Zielvorgaben lassen sich nach dem Stand der Technik zusammen nur bedingt verwirklichen. So ist beispielsweise aus der EP-A 86473 ein Katalysatorsystem bekannt, bei dem als Elektronendonorverbindungen als Bestandteile der titanhaltigen Feststoffkomponente Carbonsäureester und als Cokatalysator u.a. Siliciumverbindungen verwendet werden, das zwar eine befriedigend hohe Produktivität aufweist, im Hinblick auf die Stereospezifität der entstehenden Polymerisate aber zu wünschen übrig läßt. In der EP-A 171 200 wird ferner ein Ziegler-Natta-Katalysatorsystem beschrieben, das als Bestandteil der titanhaltigen Feststoffkomponente u.a. Carbonsäureester, sowie Silicium- und Aluminiumverbindungen als Cokatalysatoren enthält. Dieses Katalysatorsystem ermöglicht die Herstellung von Polypropylenen mit hoher Stereospezifität, weist aber neben einer nicht mehr befriedigenden Produktivität den weiteren Nachteil auf, daß die Kornverteilung des hierbei erhältlichen Polymerisats zu breit ist.

Neben diesen, insbesondere für die Verarbeitung der Polymerisate wichtigen Eigenschaften ist auch ein niedriger Halogengehalt im Polyolefin von Bedeutung, um die Verwendung derartiger Materialien in Kombination mit korrosionsgefährdeten Stoffen zu ermöglichen. Dazu ist es vorallem notwendig, den Halogengehalt im Polymerisat deutlich zu reduzieren.

Polymerisationsverfahren zur Herstellung von Polyolefinen werden vorteilhaft in Lösung, in einer Aufschlämmung oder in der Gasphase durchgeführt. Gegenüber den anderen Polymerisationsverfahren unterscheidet sich die Gasphasenpolymerisation durch eine besonders einfache Verfahrensführung. Dabei muß jedoch eine Verringerung der Katalysatorproduktivität sowie eine Verschlechterung der Stereospezifität und der morphologischen Eigenschaften der entstehenden Polymerisate in Kauf genommen werden. So wird beispielsweise in der GB-A 2 111 066 ein Katalysatorsystem zur Polymerisation von Polyolefinen beschrieben, das ebenfalls u.a. Carbonsäureester als Bestandteile der titanhaltigen Feststoffkomponente und Siliciumverbindungen als Cokatalysatoren enthält. Dieses Katalysatorsystem zeichnet sich durch eine hohe Produktivität und durch gute Produkteigenschaften der dabei gebildeten Homopolymerisate, insbesondere hinsichtlich der Stereospezifität, der Kornverteilung und des Feinstkornanteils aus. Wie der nachstehende Vergleichsversuch A der vorliegenden Anmeldung zeigt, verschlechtern sich diese Eigenschaften jedoch erheblich, wenn die Polymerisation statt in der Lösungsphase in der Gasphase durchgeführt wird.

Der vorliegenden Erfindung lag als Aufgabe die Entwicklung eines neuen Katalysatorsystems zugrunde, mit dem den geschilderten Nachteilen weitgehend abgeholfen werden kann und mit welchem es insbesondere möglich ist, auch in der Gasphase Polypropylen mit hoher Produktivität herzustellen, das sich durch eine hohe Stereospezifität und durch gute morphologische Eigenschaften, insbesondere durch einen möglichst geringen Feinstkornanteil auszeichnet.

Demgemäß wurden die in den Patentansprüchen angeführten neuen Katalysatorsysteme gefunden.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wobei sich Silicium- und Aluminiumoxide, sowie Aluminiumsilicate gut bewährt haben. Als bevorzugter Träger wird $SiO_2 \cdot aAl_2O_3$ verwendet, wobei a für einen Wert im Bereich von 0 bis 2, insbesondere im Bereich von 0 bis 0,5 steht.

Weiter werden bei der Herstellung der titanhaltigen Feststoffkomponente sind u.a. Verbindungen des Magnesiums eingesetzt. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-($C_1$-$C_{10}$-alkyl )-Verbindungen verwendet werden. Daneben enthält die titanhaltige Feststoffkomponente Halogen, bevorzugt Chlor oder Brom.

Erfindungsgemäß enthält die titanhaltige Feststoffkomponente noch einen Diester einer 3-gliedrigen Cycloalkan-1,2-dicarbonsäure der Formel Ia,

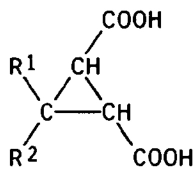

(Ia)

wobei $R^1$ und $R^2$ gleich oder verschieden sind und ein H-Atom, eine $C_1$- bis $C_{15}$-Alkylgruppe, eine $C_7$- bis $C_{15}$-Alkylarylgruppe, oder eine 5- bis 7-gliedrige Cycloalkylgruppe, bedeuten. Bevorzugt sind dabei solche Carbonsäuren, bei denen $R^1$ und $R^2$ für ein H-Atom oder für eine $C_1$-$C_8$-Alkylgruppe stehen.

Als Hydroxyverbindungen werden die, bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole. Bevorzugt eingesetzte Ester enthalten als Alkoholreste $C_1$- bis $C_8$-Alkanole.

Beispiele für besonders gut geeignete Ester sind u.a. die Ester der Cyclopropan-1,2-dicarbonsäure, wobei als Hydroxyverbindungen insbesondere Pentanol, Hexanol, Heptanol und Octanol verwendet werden.

Die titanhaltige Feststoffkomponente kann in sonst an sich bekannter Weise hergestellt werden, wie sie z.B. in der EP-A 45 975, der EP-A 45 977, der EP-A 86 473, der EP-A 171 200 und der GB-A 2 111 066 beschrieben ist.

Vorzugsweise wird zur Herstellung der titanhaltigen Feststoffkomponente folgendes dreistufige Verfahren angewandt.

In der ersten Stufe versetzt man zunächst einen feinteiligen Träger, bevorzugt $SiO_2 \cdot aAl_2O_3$ - wobei a für eine Zahl im Bereich von 0 bis 2, insbesondere im Bereich von 0 bis 0,5 steht - der in der Regel einen Teilchendurchmesser von 0,1 bis 1000 µm, insbesondere von 10 bis 300 µm, ein Porenvolumen von 0,1 bis 10 $cm^3/g$, insbesondere von 1,0 bis 4,0 $cm^3/g$, und eine spezifische Oberfläche von 10 bis 1000 $m^2/g$, insbesondere von 100 bis 500 $m^2/g$, aufweist, mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltigen Verbindung, ein. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie den erfindungsgemäß einzusetzenden Cycloalkan-1,2-dicarbonsäureester hinzu. Dabei setzt man pro Mol Magnesium des aus der ersten Stufe erhaltenen Feststoffs 1 bis 5 Mol, insbesondere 2 bis 4 Mol, Alkanol, 2 bis 20 Mol, insbesondere 4 bis 10 Mol, des drei- oder vierwertigen Titans und 0,01 bis 1 Mol, insbesondere 0,1 bis 1,0 Mol, des Cycloalkan-1,2-dicarbonsäureesters ein. Das Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange

mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird zusammen mit Cokatalysatoren als Ziegler-Natta-Katalysatorsystem verwendet. Als Cokatalysatoren kommen dabei insbesondere Aluminiumverbindungen in Frage. Vorzugsweise werden neben einer Aluminiumverbindung noch Elektronendonorverbindungen als weitere Cokatalysatoren eingesetzt.

Als Aluminiumkomponente kommen neben Trialkylaluminium auch solche Verbindungen in Betracht, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Neben der titanhaltigen Feststoffkomponente und der Aluminiumverbindung enthalten die erfindungsgemäßen Katalysatorsysteme bevorzugt ferner noch weitere Elektronendonorverbindungen wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonore sind siliciumorganische Verbindungen der Formel II

$$R^5_n\, Si(OR^6)_{4-n} \qquad (II)$$

wobei

$R^5$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe, $R^6$ eine $C_1$- bis $C_{20}$-Alkylgruppe bedeutet und n für die Zahlen 1, 2 oder 3 steht. Besonders bevorzugt werden dabei solche Verbindungen, in denen $R^5$ eine $C_1$- bis $C_8$-Alkylgruppe oder eine 5- bis 7-gliedrige Cycloalkylgruppe, sowie $R^6$ eine $C_1$- bis $C_4$-Alkylgruppe bedeutet und n für die Zahlen 1 oder 2 steht.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan besonders geeignet.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der Elektronendonorverbindung c) 1:1 bis 100:1, insbesondere 2:1 bis 80:1 beträgt.

Das erfindungsgemäße Katalysatorsystem ist für die Herstellung von Polymerisaten des Propylens besonders geeignet.

Die Herstellung von Polyolefinen, insbesondere von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktiondauer hängt entscheidend von den jeweils gewählten Polymerisationsbedingungen ab. Sie liegt üblicherweise zwischen 0,2 und 20 Stunden, meistens zwischen 0,5 und 10 Stunden.

Unter Polymerisaten des Propylens werden neben Homopolymerisaten des Propylens auch Copolymerisate des Propylens mit untergeordneten Mengen anderer $\alpha,\beta$-ungesättigter olefinischer Verbindungen mit 2 bis 12 C-Atomen verstanden, z.B. von $\alpha$-Monoolefinen oder von bifunktionellen $\alpha$-Olefinen wie beispielsweise Hexa-di-1,5-en. Besonders geeignete Comonomere sind Ethylen, But-1-en, Pent-1-en, 4-Methylpent-1-en, Hex-1-en, Hept-1-en und Oct-1-en.

Die dabei erhaltenen Copolymerisate können sowohl blockartig, als auch statistisch oder alternierend aufgebaut sein. Das erfindungsgemäße Katalysatorsystem eignet sich insbesondere auch zur Herstellung von Propylen-Ethylen-Copolymerisaten mit bis zu 10 Gew.-% von einpolymerisiertem Ethylen, von Terpolymerisaten des Propylens mit untergeordneten Mengen von einpolymerisiertem Ethylen und But-1-en und von Propylen-Ethylen-Blockcopolymerisaten, die neben Polypropylenblöcken noch Blöcke von einpolymerisierten Propylen-Ethylen-Copolymerisaten enthalten.

Die Polymerisationsreaktion wird zweckmäßigerweise bei Temperaturen von 20 bis 160°C und Drücken von 1 bis 100 bar durchgeführt. Bevorzugt sind dabei Temperaturen zwischen 40 und 120°C und Drücke zwischen 10 und 80 bar. Die Molmasse der dabei gebildeten Polyolefine kann durch Zugabe von in der Polymerisationstechnik gebräuchlichen Reglern, beispielsweise von Wasserstoff kontrolliert und auf eine engere Verteilung eingestellt werden. Weiterhin ist es möglich, inerte Lösungsmittel wie beispielsweise Toluol oder Hexan, Inertgase wie Stickstoff oder Argon und kleinere Mengen Polypropylenpulver mitzuverwenden.

Die erfindungsgemäß erhältlichen Propylenhomo- und -copolymerisate sind in den für Polyolefine üblichen Molmassen erhältlich, wobei Polymerisate mit Molmassen zwischen 20 000 und 500 000 bevorzugt werden.

Mit dem erfindungsgemäßen Katalysatorsystem wird sowohl die Produktivität als auch die Stereospezifität bei der Polymerisation von Propylen verbessert. Die auf diese Weise zugänglichen Polymerisate weisen einen sehr geringen Feinstkornanteil (<0,25 mm) und einen niedrigen Chlorgehalt auf.

Aufgrund ihrer guten mechanischen Eigenschaften eignen sich die mit dem erfindungsgemäßen Katalysatorsystem hergestellten Propylenpolymerisate vor allem für die Herstellung von Folien und Formkörpern.

## Beispiele

### Beispiel 1

a) Herstellung der titanhaltigen Feststoffkomponente

In einer ersten Stufe wurde $SiO_2$, das einen Teilchendurchmesser von 20 bis 45 μm, ein Porenvolumen von 1,6 $cm^3$/g und eine spezifische Oberfläche von 335 $m^2$/g aufwies, mit einer 20 %igen Lösung von n-Butyloctylmagnesium in n-Heptan versetzt, wobei pro Mol $SiO_2$ 0,25 Mol der Magnesiumverbindung eingesetzt wurden. Die Lösung wurde 60 Minuten bei 40°C unter Rückfluß gerührt, danach auf 20°C abgekühlt, wonach die 10fache molare Menge, bezogen auf die Magnesiumverbindung, an Chlorwasserstoff eingeleitet wurde. Nach 60 Minuten wurde das feste Produkt von dem Lösungsmittel abgetrennt.

Das in der ersten Stufe erhaltene Produkt wurde erneut mit n-Heptan versetzt und unter ständigem Rühren mit 3 Mol Ethanol pro Mol Magnesium versetzt. Dieses Gemisch wurde 1 Stunde bei 80°C gerührt und anschließend mit 6,7 Mol Titantetrachlorid und 0,3 Mol Cyclopropan-1,2-dicarbonsäure-n-hexylester, jeweils bezogen auf 1 Mol Magnesium, versetzt. Anschliepend wurde 2 Stunden bei 100°C gerührt, der so erhaltene feste Stoff abfiltriert und 3mal mit jeweils 100 ml n-Heptan gewaschen.

Das erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,8 Gew.-% Ti
5,9 Gew.-% Mg
24,0 Gew.-% Cl.

b) Polymerisation

In einem mit einem Rührer versehenen 10 l-Stahlautoklaven wurden bei 30°C 50 g Polypropylenpulver (Schmelzflußindex: 8 g/10 min), 10 mmol Triethylaluminium (in Form einer 1-molaren Lösung in n-Heptan), 1,0 mmol Dimethoxyisobutylisopropylsilan (in Form einer 1-molaren Lösung in n-Heptan), 10 l Wasserstoff und 100 mg der gemäp Beispiel 1a) hergestellten titanhaltigen Feststoffkomponente vorgelegt. Anschließend wurde die Reaktortemperatur innerhalb von 15 Minuten auf 70°C erhöht, der Reaktordruck durch Aufpressen von gasförmigem Propylen auf 28 bar gebracht, wonach 2 Stunden lang polymerisiert wurde. Hierbei wurde das verbrauchte Monomere kontinuierlich durch neues ersetzt.

Dabei erhielt man 996 g eines Propylenhomopolymerisats mit einer mittleren Molmasse von 245.000. Die Produktivität des Katalysatorsystems, die als das Verhältnis der Menge an gebildetem Polymerisat zur Menge der titanhaltigen Feststoffkomponente definiert wird, der heptanlösliche Anteil, der eine Maßzahl für den Anteil an nichtisotaktischen Struktureinheiten darstellt, der Feinstkornanteil (< 0,25 mm) und der Chlorgehalt des Polymerisats sind in der nachstehenden Tabelle zusammengestellt.

### Beispiel 2

Entsprechend Beispiel 1a) wurde eine titanhaltige Feststoffkomponente hergestellt, jedoch anstelle des Cyclopropan-1,2-dicarbonsäure-n-hexylesters die gleiche molare Menge von Cyclopropan-1,2-dicarbonsäure-n-pentylester verwendet.

Die titanhaltige Feststoffkomponente enthielt
3,6 Gew.-% Ti
5,9 Gew.-% Mg
24,3 Gew.-% Cl.

Mit diesem Katalysator-Feststoff a) wurde Propylen analog Beispiel 1b polymerisiert. Dabei erhielt man

1500 kg eines Propylenhomopolymerisats mit einer mittleren Molmasse von 255.000. Die weiteren Ergebnisse sind in nachstehender Tabelle wiedergegeben.

Vergleichsbeispiel A

Unter den Bedingungen des Beispiels 1 der vorliegenden Patentanmeldung wurde Propylen polymerisiert, abweichend hierzu jedoch mit dem Katalysator gemäp Beispiel 1 der GB-A-2 111 066. Dieser Katalysator wies in der titanhaltigen Feststoffkomponente a) neben Titantetrachlorid und Magnesiumchlorid als Elektronendonor Diisobutylphthalat und Phthalsäureanhydrid auf. Neben der titanhaltigen Feststoffkomponente wurde als Aluminium-Cokatalysator Triethylaluminium und als weitere Elektronendonorverbindung Phenyltriethoxysilan verwendet.

Die verwendete titanhaltige Feststoffkomponente a) enthielt
3,1 Gew.-% Ti
17,0 Gew.-% Mg
56,0 Gew.-% Cl

In der nachstehenden Tabelle sind die Ergebnisse dieses Vergleichsversuchs A mit dem Katalysator gemäß Beispiel 1 der GB-A-2 111 066 und die der vorliegenden Erfindung (Beispiele 1 und 2) wiedergegeben.

Wie die Tabelle zeigt, erhält man mit dem erfindungsgemäßen Katalysatorsystem unter den Bedingungen der Gasphasenpolymerisation höhere Produktivitäten und Stereospezifitäten und insbesondere einen verringerten Feinstkornanteil im Polymerisat als mit dem Katalysatorsystem gemäß Beispiel 1 der GB-A-2 111 066.

Tabelle

| | Beispiel 1 | Beispiel 2 | Vergleichsversuch A |
|---|---|---|---|
| Produktivität (g Polypropylen/ g titanhaltige Feststoffkomponente) | 9960 | 15000 | 9345 |
| heptanlösliche Anteile (Gew.-%) | 1,7 | 2,4 | 2,4 |
| Feinstkornanteil <0,25 mm (in %) | 1,0 | 1,2 | 82,4 |
| Chlorgehalt im Polymerisat (ppm) | 28 | 16 | 60 |

## Patentansprüche

### Patentansprüche für folgende Vertragsstaaten : AT, BE, DE, FR, GB, IT, NL

1. Katalysatorsysteme vom Typ der Ziegler-Natta-Katalysatoren, enthaltend als aktive Bestandteile
   a) eine titanhaltige Feststoffkomponente, die Titan, Magnesium, Halogen und einen Carbonsäureester enthält,
   sowie als Cokatalysator
   b) eine Aluminiumverbindung und
   c) gegebenenfalls weitere Elektronendonorverbindungen,

   dadurch gekennzeichnet, daß sie in der Feststoffkomponente als Carbonsäureester einen Diester einer

Carbonsäure der Formel Ia

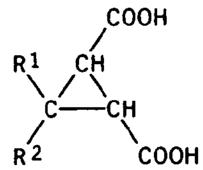

(Ia)

enthalten, in der $R^1$ und $R^2$ gleich oder verschieden sind und ein H-Atom, eine $C_1$- bis $C_{15}$-Alkylgruppe, eine $C_7$- bis $C_{15}$-Alkylarylgruppe oder eine 5- bis 7-gliedrige Cycloalkylgruppe, bedeuten, und wobei als Hydroxyverbindungen $C_1$- bis $C_{15}$-Alkanole, $C_5$- bis $C_7$-Cycloalkanole, die ihrerseits $C_1$- bis $C_{10}$-Alkylgruppen tragen können oder $C_6$- bis $C_{10}$-Phenole verwendet werden.

**2.** Katalysatorsysteme nach Anspruch 1, dadurch gekennzeichnet, daß sie einen Diester einer 3-gliedrigen Cycloalkyl-1,2-dicarbonsäure der Formel Ia enthalten, in der $R^1$ und $R^2$ gleich oder verschieden sind und ein H-Atom oder eine $C_1$- bis $C_8$-Alkylgruppe bedeuten.

**3.** Katalysatorsysteme nach Anspruch 1 oder 2, in denen die Aluminiumverbindung b) eine Trialkylaluminiumverbindung darstellt, deren Alkylgruppen jeweils 1 bis 8 C-Atome aufweisen.

**4.** Katalysatorsysteme nach den Ansprüchen 1 bis 3, die als weitere Elektronendonorverbindung c), eine Siliciumverbindung der Formel II

$$R^5_nSi(OR^6)_{4-n} \qquad (II)$$

enthalten, in der $R^5$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe, $R^6$ eine $C_1$- bis $C_{20}$-Alkylgruppe bedeutet und n für die Zahlen 1, 2 oder 3 steht.

**5.** Katalysatorsysteme nach den Ansprüchen 1 bis 4, dadurch gekennzeichnet, daß die titanhaltige Feststoffkomponente a) $SiO_2 \cdot aAl_2O_3$ als Trägermaterial enthält, wobei a für einen Wert im Bereich von 0 bis 2 steht.

**6.** Verfahren zur Herstellung der titanhaltigen Feststoffkomponente a) der Katalysatorsysteme gemäß dem Anspruch 5, dadurch gekennzeichnet, daß man

a) in einer ersten Stufe das feinteilige Trägermaterial mit einer Lösung einer magnesiumhaltigen Verbindung in einem flüssigen Alkan bei einer Temperatur zwischen 10 und 120°C versetzt, anschließend ein Halogen oder einen Halogenwasserstoff im wenigstens zweifachen molaren Überschuß, bezogen auf die magnesiumhaltige Verbindung, hinzufügt und nach etwa 30 bis 120 Minuten den Feststoff von der flüssigen Phase abtrennt,

b) danach den resultierenden Feststoff in ein flüssiges Alkan einbringt und dieses Gemisch bei einer Temperatur zwischen 10 und 150°C mit einem $C_1$- bis $C_8$-Alkanol, einem Halogenid oder einem Alkoholat des drei- oder vierwertigen Titans und dem Cycloalkan-1,2-dicarbonsäureester der Formel Ia versetzt, wobei man pro Mol Magnesium des aus der ersten Stufe erhaltenen Feststoffs 1 bis 5 Mol Alkanol, 2 bis 20 Mol des drei- oder vierwertigen Titans und 0,01 bis 1 Mol des Cycloalkan-1,2-dicarbonsäureesters verwendet,

c) dann in einer dritten Stufe den in der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel extrahiert und anschliepend solange mit einem flüssigen Alkan wäscht, bis der Gehalt der Waschflüssigkeit an Titantetrachlorid weniger als 2 Gew.-% beträgt,

**7.** Verfahren zur Herstellung von Polymerisaten des Propylens durch Polymerisation von Propylen und gegebenenfalls von zugegebenen Comonomeren bei Temperaturen von 20 bis 160°C und Drücken von 1 bis 100 bar, dadurch gekennzeichnet, daß man hierzu Katalysatorsysteme gemäp einem der Ansprüche 1 bis 5 verwendet.

**Patentansprüche für folgenden Vertragsstaat : ES**

1. Verfahren zur Herstellung von Katalysatorsystemen vom Typ der Ziegler-Natta-Katalysatoren, enthaltend als aktive Bestandteile
   a) eine titanhaltige Feststoffkomponente, die Titan, Magnesium, Halogen und einen Carbonsäureester enthält,
   sowie als Cokatalysator
   b) eine Aluminiumverbindung und
   c) gegebenenfalls weitere Elektronendonorverbindungen,
   dadurch gekennzeichnet, daß man hierzu in der Feststoffkomponente als Carbonsäureester einen Diester einer Carbonsäure der Formel Ia

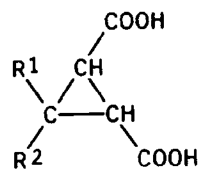

(Ia)

   verwendet, in der $R^1$ und $R^2$ gleich oder verschieden sind und ein H-Atom, eine $C_1$- bis $C_{15}$-Alkylgruppe, eine $C_7$- bis $C_{15}$-Alkylarylgruppe oder eine 5- bis 7-gliedrige Cycloalkylgruppe, bedeuten, und wobei als Hydroxyverbindungen $C_1$- bis $C_{15}$-Alkanole, $C_5$- bis $C_7$-Cycloalkanole, die ihrerseits $C_1$- bis $C_{10}$-Alkylgruppen tragen können oder $C_6$- bis $C_{10}$-Phenole verwendet werden.

2. Verfahren nach Anspruch 1, dadurch gekennzeichnet, daß man in der Feststoffkomponente a) einen Diester einer 3-gliedrigen Cycloalkan-1,2-dicarbonsäure der Formel Ia verwendet, in der $R^1$ und $R^2$ gleich oder verschieden sind und ein H-Atom oder eine $C_1$- bis $C_8$-Alkylgruppe bedeuten.

3. Verfahren nach Anspruch 1 oder 2, dadurch gekennzeichnet, daß man als Aluminiumverbindung b) eine Trialkylaluminiumverbindung verwendet, deren Alkylgruppen jeweils 1 bis 8 C-Atome aufweisen.

4. Verfahren nach den Ansprüchen 1 bis 3, dadurch gekennzeichnet, daß man als weitere Elektronendonorverbindung c) eine Siliciumverbindung der Formel II

$$R^5_nSi(OR^6)_{4-n} \qquad (II)$$

   verwendet, in der $R^5$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe, $R^6$ eine $C_1$- bis $C_{20}$-Alkylgruppe bedeutet und n für die Zahlen 1, 2 oder 3 steht.

5. Verfahren nach den Ansprüchen 1 bis 4, dadurch gekennzeichnet, daß man in der titanhaltigen Feststoffkomponente a) $SiO_2 \cdot aAl_2O_3$ als Trägermaterial verwendet, wobei a für einen Wert im Bereich von 0 bis 2 steht.

6. Verfahren nach Anspruch 5, dadurch gekennzeichnet, daß man
   a) in einer ersten Stufe das feinteilige Trägermaterial mit einer Lösung einer magnesiumhaltigen Verbindung in einem flüssigen Alkan bei einer Temperatur zwischen 10 und 120°C versetzt, anschliepend ein Halogen oder einen Halogenwasserstoff im wenigstens zweifachen molaren Überschuß, bezogen auf die magnesiumhaltige Verbindung, hinzufügt und nach etwa 30 bis 120 Minuten den Feststoff von der flüssigen Phase abtrennt,
   b) danach den resultierenden Feststoff in ein flüssiges Alkan einbringt und dieses Gemisch bei einer Temperatur zwischen 10 und 150°C mit einem $C_1$- bis $C_8$-Alkanol, einem Halogenid oder einem Alkoholat des drei- oder vierwertigen Titans und dem Cycloalkan-1,2-dicarbonsäureester der Formel Ia versetzt, wobei man pro Mol Magnesium des aus der ersten Stufe erhaltenen Feststoffs 1 bis 5 Mol Alkanol, 2 bis 20 Mol des drei- oder vierwertigen Titans und 0,01 bis 1 Mol des Cycloalkan-1,2-dicarbonsäureesters verwendet,
   c) dann in einer dritten Stufe den in der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel extrahiert und anschliepend solange mit einem flüssigen Alkan wäscht, bis der Gehalt der Waschflüssigkeit an Titantetrachlorid weniger als 2 Gew.-% beträgt,

7. Verfahren zur Herstellung von Polymerisaten des Propylens durch Polymerisation von Propylen und gegebenenfalls von zugegebenen Comonomeren bei Temperaturen von 20 bis 160°C und Drücken von 1 bis 100 bar, dadurch gekennzeichnet, daß man hierzu Katalysatorsysteme gemäß einem der Ansprüche 1 bis 5 verwendet.

## Claims

### Claims for the following Contracting States : AT, BE, DE, FR, GB, IT, NL

1. A Ziegler-Natta-type catalyst system containing, as active constituents,
   a) a titanium-containing solid component which also contains magnesium, halogen and a carboxylic acid ester, and, as cocatalyst,
   b) an aluminum compound, and
   c) if desired a further electron donor,

   wherein the carboxylic acid ester in the solid component is a diester of a carboxylic acid of the formula Ia

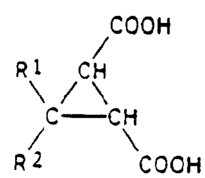

(Ia)

where $R^1$ and $R^2$ are identical or different and are hydrogen, $C_1$- to $C_{15}$-alkyl, $C_7$- to $C_{15}$-alkylaryl, or 5- to 7-membered cycloalkyl, and in which the hydroxyl compound used is a $C_1$- to $C_{15}$-alkanol, a $C_5$- to $C_7$-cycloalkanol, which may itself carry $C_1$- to $C_{10}$-alkyl groups, or a $C_6$- to $C_{10}$-phenol.

2. A catalyst system as claimed in claim 1, which contains a diester of a 3-membered cycloalkane-1,2-dicarboxylic acid of the formula Ia, where $R^1$ and $R^2$ are identical or different and are hydrogen or $C_1$- to $C_8$-alkyl.

3. A catalyst system as claimed in claims 1 or 2, in which the aluminum compound b) is a trialkylaluminum compound in which the alkyl groups each have from 1 to 8 carbon atoms.

4. A catalyst system as claimed in claims 1 to 3, wherein the further electron donor c) is a silicon compound of the formula II

$$R^5_nSi(OR^6)_{4-n} \qquad (II)$$

where $R^5$ is $C_1$-$C_{20}$-alkyl, 5- to 7-membered cycloalkyl, which may itself carry a $C_1$-$C_{10}$-alkyl group, or $C_6$-$C_{20}$-aryl or arylalkyl, $R^6$ is $C_1$-$C_{20}$-alkyl, and n is 1, 2 or 3.

5. A catalyst system as claimed in any of claims 1 to 4, wherein the titanium-containing solid component a) contains $SiO_2 \cdot aAl_2O_3$ as carrier material, where a is from 0 to 2.

6. A process for the preparation of the titanium-containing solid component a) in the catalyst system as claimed in claim 5, which comprises
   a) adding, in a first step, a solution of a magnesium-containing compound in a liquid alkane to the finely divided carrier material at from 10 to 120°C, subsequently adding a halogen or a hydrogen halide in an at least two-fold molar excess, based on the magnesium-containing compound, and, after from about 30 to 120 minutes, separating the solid from the liquid phase,

b) then introducing the resultant solid into a liquid alkane and adding to the mixture a $C_1$-$C_8$-alkanol, a halide or an alkoxide of trivalent or tetravalent titanium and the cycloalkane-1,2-dicarboxylate of the formula Ia at from 10 to 150°C, from 1 to 5 mol of alkanol, from 2 to 20 mol of trivalent or tetravalent titanium and from 0.01 to 1 mol of the cycloalkane-1,2-dicarboxylate being used per mol of magnesium in the solid obtained in the first step,

c) then, in a third step, extracting the solid obtained in the second step for several hours at from 100 to 150°C with excess titanium tetrachloride or an excess of a solution of titanium tetrachloride in an inert solvent, and subsequently washing the product with a liquid alkane until the content of titanium tetrachloride in the washings is less than 2 % by weight.

**7.** A process for the preparation of a propylene polymer by polymerizing propylene and, if desired, added comonomers at from 20 to 160°C and from 1 to 100 bar, which comprises using a catalyst system as claimed in any of claims 1 to 15.

**Claims for the following Contracting State : ES**

**1.** A process for the preparation of a Ziegler-Natta-type catalyst system containing, as active constituents,

a) a titanium-containing solid component which also contains magnesium, halogen and a carboxylic acid ester, and, as cocatalyst,

b) an aluminum compound, and

c) if desired a further electron donor,

wherein the carboxylic acid ester used in the solid component is a diester of a carboxylic acid of the formula Ia

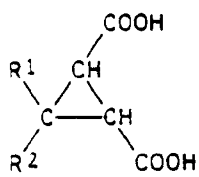

(Ia)

where $R^1$ and $R^2$ are identical or different and are hydrogen, $C_1$- to $C_{15}$-alkyl, $C_7$- to $C_{15}$-alkylaryl, or 5- to 7-membered cycloalkyl, and in which the hydroxyl compound used is a $C_1$- to $C_{15}$-alkanol, a $C_5$- to $C_7$-cycloalkanol, which may itself carry $C_1$- to $C_{10}$-alkyl groups, or a $C_6$- to $C_{10}$-phenol.

**2.** A process as claimed in claim 1, wherein a diester of a 3-membered cycloalkane-1,2-dicarboxylic acid of the formula Ia, where $R^1$ and $R^2$ are identical or different and are hydrogen or $C_1$- to $C_8$-alkyl, is used in the solid component a).

**3.** A process as claimed in claim 1 or 2, wherein the aluminum compound b) used is a trialkylaluminum compound in which the alkyl groups each have from 1 to 8 carbon atoms.

**4.** A process as claimed in claims 1 to 3, wherein the further electron donor c) used is a silicon compound of the formula II

$$R^5_nSi(OR^6)_{4-n} \qquad (II)$$

where $R^5$ is $C_1$-$C_{20}$-alkyl, 5- to 7-membered cycloalkyl which may itself carry a $C_1$-$C_{10}$-alkyl group, or $C_6$-$C_{20}$-aryl or arylalkyl, $R^6$ is $C_1$-$C_{20}$-alkyl, and n is 1, 2 or 3.

**5.** A process as claimed in any of claims 1 to 4, wherein the carrier material used in the titanium-containing solid component a) is $SiO_2 \cdot aAl_2O_3$, where a is from 0 to 2.

**6.** A process as claimed in claim 5, which comprises

a) adding, in a first step, a solution of a magnesium-containing compound in a liquid alkane to the finely divided carrier material at from 10 to 120°C, subsequently adding a halogen or a hydrogen halide in an at least two-fold molar excess, based on the magnesium-containing compound, and, after from about 30 to 120 minutes, separating the solid from the liquid phase,

b) then introducing the resultant solid into a liquid alkane and adding to this mixture a $C_1$-$C_8$-alkanol, a halide or an alkoxide of trivalent or tetravalent titanium and the cycloalkane-1,2-dicarboxylate of the formula Ia at from 10 to 150°C, from 1 to 5 mol of alkanol, from 2 to 20 mol of trivalent or tetravalent titanium and from 0.01 to 1 mol of the cycloalkane-1,2-dicarboxylate being used per mol of magnesium from the solid obtained in the first step,

c) then, in a third step, extracting the solid obtained in the second step for several hours at from 100 to 150°C with excess titanium tetrachloride or an excess of a solution of titanium tetrachloride in an inert solvent, and subsequently washing the product with a liquid alkane until the content of titanium tetrachloride in the washings is less than 2 % by weight.

7. A process for the preparation of a propylene polymer by polymerizing propylene and, if desired, added comonomers at from 20 to 160°C and from 1 to 100 bar, which comprises using a catalyst system as claimed in any of claims 1 to 5.

## Revendications

### Revendications pour les Etats contractants suivants : AT, BE, DE, FR, GB, IT, NL

1. Systèmes catalytiques du type des catalyseurs de Ziegler-Natta, contenant comme constituants actifs

a) un composant solide titané qui contient du titane, du magnésium, un halogène et un ester d'acide carboxylique

et, en tant que cocatalyseur,

b) un composé d'aluminium et

c) éventuellement d'autres composés donneurs d'électrons,

caractérisés en ce qu'ils contiennent dans le composant solide, en tant qu'ester d'acide carboxylique, un diester d'un acide carboxylique de formule Ia

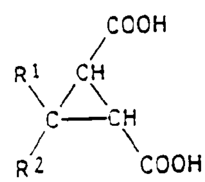

(Ia)

dans laquelle $R^1$ et $R^2$ sont identiques ou différents et représentent chacun un atome d'hydrogène, un groupement alkyle en $C_1$ à $C_{15}$, un groupement alkylaryle en $C_7$ à $C_{15}$ ou un groupement cycloalkyle à 5-7 maillons, des alcanols en $C_1$ à $C_{15}$, des cycloalcanols en $C_5$ à $C_7$, qui peuvent porter à leur tour des groupements alkyle en $C_1$ à $C_{15}$, ou des phénols en $C_6$ à $C_{10}$ étant utilisés comme composés hydroxylés.

2. Systèmes catalytiques selon la revendication 1, caractérisés en ce qu'ils contiennent un diester d'un acide cycloalcane-1,2-dicarboxylique à 3 maillons de formule Ia, dans laquelle $R^1$ et $R^2$ sont identiques ou différents et représentent checun un atome d'hydrogène ou un groupement alkyle en $C_1$ à $C_8$.

3. Systèmes catalytiques selon la revendication 1 ou 2, dans lesquels le composé d'aluminium b) est un trialkylaluminium dont les groupements alkyle renferment chacun de 1 à 8 atomes de carbone.

4. Systèmes catalytiques selon l'une quelconque des revendications 1 à 3 qui contiennent, en tant qu'autre composé donneur d'électrons c), un composé du silicium de formule II

$$R^5_nSi(OR^6)_{4-n} \qquad (II)$$

dans laquelle $R^5$ représente un groupement alkyle en $C_1$ à $C_{20}$, un groupement cycloalkyle à 5-7 maillons, qui peut porter à son tour un groupement alkyle en $C_1$ à $C_{10}$, ou un groupement aryle ou alkylaryle en $C_6$ à $C_{20}$, $R^6$ représente un groupement alkyle en $C_1$ à $C_{20}$ et n est mis pour l'un des nombres 1, 2 et 3.

5. Systèmes catalytiques selon l'une quelconque des revendications 1 à 4, caractérisés en ce que le composant solide titane a) contient $SiO_2.aAl_2O_3$ comme matière de support, a étant mis pour un nombre dans la gamme de 0 à 2.

6. Procédé de préparation des composants solides titanés a) des systèmes catalytiques selon la revendication 5, caractérisé en ce que
   a) dans une première étape, on additionne la matière de support finement divisée d'une solution d'un composé magnésien dans un alcane liquide, à une température comprise entre 10 et 120°C, puis on y ajoute un halogène ou un hydracide halogéné en excès molaire au moins double par rapport au composé magnésien et, au bout d'environ 30 à 120 mn, on sépare la matière solide de la phase liquide,
   b) après quoi, on introduit la matière solide résultante dans un alcane liquide et on additionne ce mélange, à une température comprise entre 10 et 150°C, d'un alcanol en $C_1$ à $C_8$, d'un halogénure ou d'un alcoolate du titane tri- ou tétravalent et de l'ester d'acide cycloalcane-1,2-dicarboxylique de formule Ia, en utilisant, par mole de magnésium de la matière solide obtenue dans la première étape, 1 à 5 moles d'alcanol, 2 à 20 moles du titane tri- ou tétravalent et 0,01 à 1 mole de l'ester d'acide cycloalcane-1,2-dicarboxylique,
   c) puis, dans une troisième étape, on extrait la matière solide obtenue dans la deuxième étape, pendant quelques heures et à des températures comprises entre 100 et 150°C, avec du tétrachlorure de titane en excès ou avec une solution, présente en excès, de tétrachlorure de titane dans un solvant inerte, et on lave ensuite avec un alcane liquide jusqu'à ce que la teneur du liquide de lavage en tétrachlorure de titane soit inférieure à 2% en poids.

7. Procédé de préparation de polymères du propylène par polymérisation de propylène et éventuellement de comonomères ajoutés, à des températures de 20 à 160°C et sous des pressions de 1 à 100 bar, caractérisé en ce qu'on utilise à cet effet des systèmes catalytiques selon l'une quelconque des revendications 1 a 5.

**Revendications pour l'Etat contractant suivant : ES**

1. Procédé de préparation de systèmes catalytiques du type des catalyseurs de Ziegler-Natta, contenant comme constituants actifs
   a) un composant solide titane qui contient du titane, du magnésium, un halogène et un ester d'acide carboxylique
   et, en tant que cocatalyseur,
   b) un composé d'aluminium et
   c) éventuellement d'autres composés donneurs d'électrons,
   caractérisé en ce qu'on utilise à cette fin dans le composant solide, en tant qu'ester d'acide carboxylique, un diester d'un acide carboxylique de formule Ia

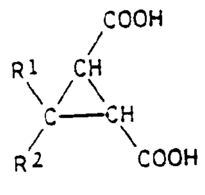

(Ia)

dans laquelle $R^1$ et $R^2$ sont identiques ou différents et représentent chacun un atome d'hydrogène, un groupement alkyle en $C_1$ à $C_{15}$, un groupement alkylaryle en $C_7$ à $C_{15}$ ou un groupement cycloalkyle à 5-7 maillons, des alcanols en $C_1$ à $C_{15}$, des cycloalcanols en $C_5$ à $C_7$, qui peuvent porter à leur tour des groupements alkyle en $C_1$ à $C_{15}$, ou des phénols en $C_6$ à $C_{10}$ étant utilisés comme composés hydroxylés.

2. Procédé selon la revendication 1, caractérisé en ce qu'on utilise, dans le composant solide a), un diester d'un acide cycloalcane-1,2-dicarboxylique à 3 maillons de formule Ia, dans laquelle $R^1$ et $R^2$ sont identiques ou différents et représentent checun un atome d'hydrogène ou un groupement alkyle en $C_1$ à $C_8$.

3. Procédé selon la revendication 1 ou 2, caractérisé en ce qu'on utilise, comme composé d'aluminium b),

un trialkylaluminium dont les groupements alkyle renferment chacun de 1 à 8 atomes de carbone.

**4.** Procédé selon l'une quelconque des revendications 1 à 3, caractérisé en ce qu'on utilise, comme autre composé donneur d'électrons c), un composé du silicium de formule II

$$R^5{}_nSi\,(OR^6)_{4-n} \qquad (II)$$

dans laquelle $R^5$ représente un groupement alkyle en $C_1$ à $C_{20}$, un groupement cycloalkyle à 5-7 maillons, qui peut porter à son tour un groupement alkyle en $C_1$ à $C_{10}$, ou un groupement aryle ou alkylaryle en $C_6$ à $C_{20}$, $R^6$ représente un groupement alkyle en $C_1$ à $C_{20}$ et n est mis pour l'un des nombres 1, 2 et 3.

**5.** Procédé selon l'une quelconque des revendications 1 à 4, caractérisé en ce que, dans le composant solide titané a), on utilise $SiO_2.aAl_2O_3$ comme matière de support, a étant mis pour un nombre dans la gamme de 0 à 2.

**6.** Procédé selon la revendication 5, caractérisé en ce que

a) dans une première étape, on additionne la matière de support finement divisée d'une solution d'un composé magnésien dans un alcane liquide, à une température comprise entre 10 et 120°C, puis on y ajoute un halogène ou un hydracide halogéné en excès molaire au moins double par rapport au composé magnésien et, au bout d'environ 30 à 120 mn, on sépare la matière solide de la phase liquide,

b) après quoi, on introduit la matière solide résultante dans un alcane liquide et on additionne ce mélange, à une température comprise entre 10 et 150°C, d'un alcanol en $C_1$ à $C_8$, d'un halogénure ou d'un alcoolate du titane tri- ou tétravalent et de l'ester d'acide cycloalcane-1,2-dicarboxylique de formule Ia, en utilisant, par mole de magnésium de la matière solide obtenue dans la première étape, 1 à 5 moles d'alcanol, 2 à 20 moles du titane tri- ou tétravalent et 0,01 à 1 mole de l'ester d'acide cycloalcane-1,2-dicarboxylique,

c) puis, dans une troisième étape, on extrait la matière solide obtenue dans la deuxième étape, pendant quelques heures et à des températures comprises entre 100 et 150°C, avec du tétrachlorure de titane en excès ou avec une solution, présente en excès, de tétrachlorure de titane dans un solvant inerte, et on lave ensuite avec un alcane liquide jusqu'à ce que la teneur du liquide de lavage en tétrachlorure de titane soit inférieure à 2% en poids.

**7.** Procédé de préparation de polymères du propylène par polymérisation de propylène et éventuellement de comonomères ajoutés, a des températures de 20 à 160°C et sous des pressions de 1 à 100 bar, caractérisé en ce qu'on utilise à cet effet des systèmes catalytiques selon l'une quelconque des revendications 1 à 5.